# FASCICULE DE BREVET EUROPEEN

(11) **EP 2 794 312 B1**
(45) Date de publication et mention de la délivrance du brevet: **08.01.2020**
(21) Numéro de dépôt: 12808792.1
(22) Date de dépôt: 17.12.2012
(51) Int. Cl.: B60H 1/00

(54) **DISPOSITIF DE CHAUFFAGE ET/OU CLIMATISATION POUR VÉHICULE AUTOMOBILE**
FAHRZEUGHEIZ- UND/ODER KLIMATISIERUNGSVORRICHTUNG
MOTOR VEHICLE HEATING AND/OR AIR-CONDITIONING DEVICE

(30) Priorité: 23.12.2011 FR 1104091
(43) Date de publication de la demande: 29.10.2014
(73) Titulaire: Valeo Systemes Thermiques, 78320 Le Mesnil Saint Denis (FR)
(72) Inventeur: ALMORI, Armelle, F-78310 Maurepas (FR); GUIGOU, Pascal, F-92260 Fontenay Aux Roses (FR)
(74) Mandataire: Metz, Gaëlle
(86) Numéro de dépôt international: PCT/EP2012/075698
(87) Numéro de publication internationale: WO 2013/092452

(56) Documents cités:
- EP-A1- 1 657 086
- DE-A1- 10 312 579
- DE-A1- 19 725 651
- DE-A1-102008 005 754
- US-A- 2 185 486
- US-A1- 2009 104 511

## Description

La présente invention se rapporte à un module de batterie électrique pour véhicule automobile, comprenant un dispositif de chauffage et/ou climatisation pour véhicule automobile. Un tel module est divulgué par DE 10 2008 005 754 A1.

La présente invention concerne plus particulièrement un dispositif de chauffage et/ou climatisation pour véhicule automobile comprenant un premier échangeur de chaleur et un deuxième échangeur de chaleur, le premier et le deuxième échangeurs de chaleur étant aptes à modifier la température d'un flux d'air traversant dans une direction d'écoulement et au moins un organe de ventilation apte à mettre en mouvement ledit flux d'air.

Un tel dispositif connu permet notamment de réguler la température de l'air dans l'habitacle du véhicule automobile en modifiant la température du flux d'air qui traverse les échangeurs de chaleur avant de pénétrer l'habitacle.

Généralement, un tel dispositif présente un agencement sous forme de blocs, et comprend un bloc appelé bloc pulseur comportant l'organe de ventilation et un bloc thermique comportant les échangeurs de chaleur ainsi que des conduits de circulation d'air.

Selon cet agencement, un flux d'air est mis en mouvement dans le bloc pulseur avant de traverser les échangeurs de chaleur du bloc thermique.

Ainsi, le bloc pulseur est disposé en amont du bloc thermique relativement à la direction d'écoulement du flux d'air.

Néanmoins, un tel agencement présente l'inconvénient d'être encombrant et n'est donc pas adapté à la régulation de la température de l'air dans un volume confiné.

En particulier, il est connu qu'une batterie électrique pour un véhicule électrique ou hybride est contenue dans un module de taille réduite et ne peut par conséquent pas être régulée en température par un tel dispositif.

Or, le contrôle de la température dans le module de batterie électrique est primordial, du fait notamment qu'une température trop basse ou trop élevée implique un vieillissement prématuré de la batterie, ce qui peut impacter également la sécurité.

Le but de la présente invention est de remédier à cet inconvénient. A cet effet, l'invention concerne un dispositif de chauffage et/ou climatisation pour un véhicule automobile comprenant un premier échangeur de chaleur et un deuxième échangeur de chaleur, le premier et le deuxième échangeurs de chaleur étant aptes à modifier la température d'un flux d'air traversant dans une direction d'écoulement et au moins un organe de ventilation apte à mettre en mouvement ledit flux d'air et qui est caractérisé en ce que au moins un organe de ventilation est disposé en aval du premier et du deuxième échangeurs de chaleur relativement à la direction d'écoulement du flux d'air traversant.

Le dispositif selon la présente invention est ainsi de taille réduite et peut par conséquent avantageusement équiper un module de batterie électrique pour véhicule électrique ou hybride, garantissant de ce fait une utilisation de batterie dans une plage de valeur de températures optimale.

Selon une autre caractéristique de l'invention, le dispositif comprend un unique organe de ventilation.

Selon une autre caractéristique de l'invention, l'unique organe de ventilation, le premier et le deuxième échangeurs de chaleur sont disposés les uns relativement aux autres de sorte que la direction d'écoulement du flux d'air est essentiellement rectiligne.

Selon une autre caractéristique de l'invention, le premier et le deuxième échangeurs sont sensiblement coaxiaux.

Selon une autre caractéristique de l'invention, le premier échangeur de chaleur est un évaporateur.

Selon une autre caractéristique de l'invention, le deuxième échangeur de chaleur est un radiateur.

Selon une autre caractéristique de l'invention, au moins un organe de ventilation est un ventilateur centrifuge.

Selon une autre caractéristique de l'invention, le dispositif comprend l'unique organe de ventilation disposé en aval de l'évaporateur et du radiateur.

D'autres caractéristiques et avantages de l'invention apparaîtront à l'examen de la description détaillée ci-après, et des dessins annexés sur lesquels :
- la figure 1 est une vue en perspective d'un dispositif de chauffage et/ou de climatisation selon la présente invention disposé dans un boîtier de logement; et
- la figure 2 est une vue de côté du dispositif de la figure 1, le boîtier étant partiellement masqué.

L'invention concerne un module de batterie électrique pour véhicule automobile, avec un dispositif de chauffage et/ou climatisation pour véhicule automobile, référencé 1 dans les figures, comprenant un premier échangeur de chaleur 2 et un deuxième échangeur de chaleur 3, ainsi qu'au moins un organe de ventilation 4.

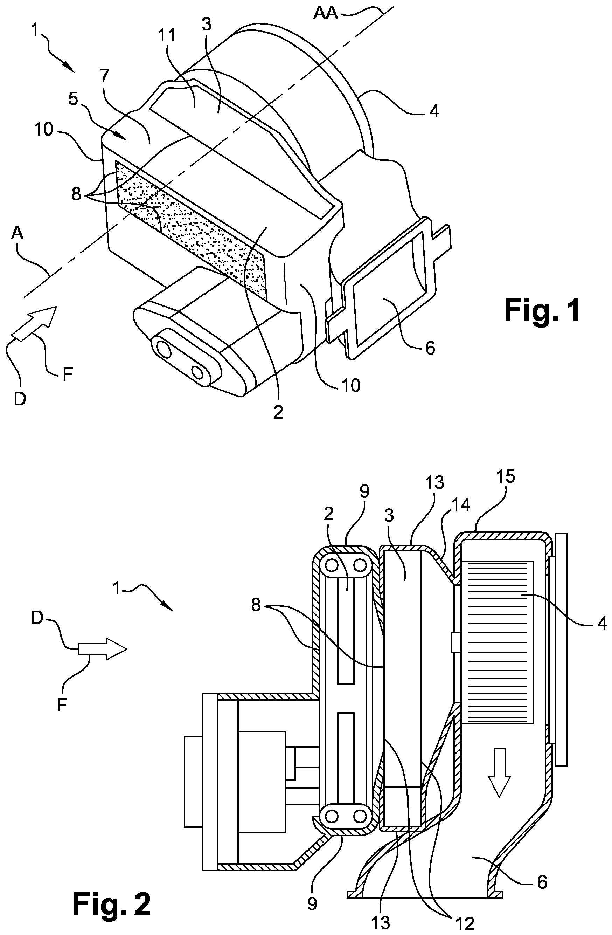

Le dispositif 1 est logé dans un boîtier 5 illustré sur la figure 1.

Les échangeurs de chaleur 2 et 3 sont chacun aptes à modifier la température d'un flux d'air F traversant dans une direction d'écoulement D.

Par direction d'écoulement, on entend la direction principale selon laquelle le flux d'air s'écoule, comme illustré sur les figures.

Chaque organe de ventilation 4 est apte à mettre en mouvement le flux d'air F.

Selon l'invention, au moins un organe de ventilation 4 est disposé en aval des échangeurs de chaleur 2 et 3, relativement à la direction d'écoulement D du flux d'air traversant F.

Ainsi, le flux d'air F pénètre le dispositif 1 depuis un conduit d'entrée d'air (non représenté), puis traverse le premier échangeur 2 et le deuxième échangeur 3 avant d'être dirigé à travers le ou les organes de ventilation 4.

Ensuite, le flux d'air F circule dans un conduit de sortie 6.

Dans le mode de réalisation illustré sur les figures, le dispositif 1 comprend un unique organe de ventilation 4.

Le premier échangeur 2 est un évaporateur destiné à refroidir le flux d'air F. Le deuxième échangeur 3 est un radiateur destiné à réchauffer le flux d'air F.

L'unique organe de ventilation 4 est disposé en aval de l'évaporateur 2 et du radiateur 3 relativement à la direction d'écoulement D du flux d'air F.

L'organe de ventilation 4, l'évaporateur 2 et le radiateur 3 sont disposés les uns relativement aux autres de sorte que la direction d'écoulement D du flux d'air F est essentiellement rectiligne et perpendiculaire aux faces des échangeurs, comme il va être détaillé ci-dessous.

L'évaporateur 2 est de la forme générale d'un parallélépipède rectangle comprenant six faces 7 délimitées par quatre bords longs 8, quatre bords courts 9 et quatre arêtes 10 formant hauteur.

L'évaporateur 2 comprend des tubes de circulation d'un fluide frigorigène et des ailettes de circulation du flux d'air F en contact avec les tubes de circulation de sorte qu'un échange calorifique a lieu dans l'évaporateur 2 entre l'air et le fluide frigorigène. Les tubes sont disposés sensiblement parallèlement entre eux et parallèlement aux bords longs 8 de l'évaporateur 2.

L'évaporateur 2 comprend un axe de symétrie A disposé sensiblement perpendiculairement aux faces délimitées par les bords longs 8 et les hauteurs 10 et passant par le centre de ces faces. La direction d'écoulement D du flux d'air F est sensiblement parallèle aux bords courts 9 et à l'axe A. Le radiateur 3 est de la forme générale d'un parallélépipède comprenant six faces 11 délimitées par quatre bords longs 12, quatre bords courts 13 et quatre arêtes 14 formant hauteur. Le radiateur 4 comprend un axe de symétrie AA disposé sensiblement perpendiculairement aux faces délimitées par les bords longs 12 et les hauteurs 14 et passant par le centre de ces faces.

Comme visible sur les figures, l'évaporateur 2 et le radiateur 3 sont montés parallèles et en regard l'un de l'autre, la direction d'écoulement D du flux d'air restant de ce fait sensiblement rectiligne et perpendiculaire aux faces des échangeurs depuis l'entrée de l'évaporateur 2 jusqu'à la sortie du radiateur 3.

Ainsi, les bords courts 9 de l'évaporateur 2 sont sensiblement parallèles aux bords courts 14 du radiateur 3 et dans le prolongement de ceux-ci.

Avantageusement, l'évaporateur 2 et le radiateur 3 sont disposés sensiblement coaxialement, c'est-à-dire que l'axe A de l'évaporateur 2 est confondu ou presque confondu avec l'axe AA du radiateur 3.

L'organe de ventilation 4 est un ventilateur de type centrifuge et comprend un boîtier 14 muni d'ailettes montées sur un arbre et aptes à être animées d'un mouvement de rotation autour de l'arbre 15. L'arbre de rotation est disposé sensiblement parallèlement à l'axe A de l'évaporateur 2 et à l'axe AA du radiateur 3, de sorte que la direction d'écoulement D du flux d'air reste sensiblement constante depuis la sortie du radiateur 3 jusqu'à l'entrée du ventilateur 4. L'agencement décrit ci-dessus assure que la direction D est essentiellement rectiligne depuis l'entrée de l'évaporateur 2 jusqu'à l'entrée du ventilateur 4. Cet agencement permet de réduire les pertes de charges puisque le trajet de l'air dans le dispositif est optimisé.

A la sortie du ventilateur 4, le flux d'air est dévié par les ailettes d'un angle d'une valeur sensiblement égale à 90°, de sorte que la direction D du flux d'air dans le conduit de sorite 5 est sensiblement orthogonale à la direction du flux d'air entrant dans le ventilateur 4, comme représenté sur la figure 2.

Comme visible sur les figures, les sections de l'évaporateur 2 et du radiateur 3 sont sensiblement identiques, ce qui contribue à réduire les pertes de charges.

Selon une autre caractéristique de l'invention, le radiateur 3 est un radiateur électrique à coefficient de température positif.

Selon une variante de l'invention, le dispositif 1 comprend une pluralité d'organes de ventilation disposés en aval des échangeurs 2 et 3 conformément aux caractéristiques décrites ci-dessus.

Le dispositif de chauffage et/ou climatisation 1 est avantageusement destiné à la gestion thermique de la batterie du véhicule automobile, le flux d'air traversant les échangeurs de chaleurs puis au moins un organe de ventilation de manière à réguler la température de la batterie.

Le dispositif 1 présente également l'avantage d'être compact du fait de la taille réduite du ventilateur 4 et de l'agencement de l'évaporateur 2, du radiateur 3 et du ventilateur 4.

Cet agencement compact et centré permet de minimiser le parcours de l'air dans le dispositif 1, ce qui contribue à réduire les pertes de charge.

On note que l'usage d'un ventilateur de type centrifuge en sortie du dispositif garantit un parcours rectiligne de l'air depuis l'entrée du dispositif 1 jusqu'à l'entrée du ventilateur 4.

## Revendications

1. Module de batterie électrique pour véhicule automobile, comprenant un dispositif de chauffage et/ou climatisation pour un véhicule automobile, ledit dispositif comprenant un premier échangeur de chaleur (2) et un deuxième échangeur de chaleur (3), le premier et le deuxième échangeurs de chaleur (2, 3) étant aptes à modifier la température d'un flux d'air (F) traversant dans une direction d'écoulement (D) et au moins un organe de ventilation (4) apte à mettre en mouvement ledit flux d'air (F), ledit organe de ventilation (4) étant un ventilateur de type centrifuge, **caractérisé en ce qu'**au moins l' organe de ventilation (4) est disposé en aval du premier et du deuxième échangeurs de chaleur (2, 3) relativement à la direction d'écoulement (D) du flux d'air (F) traversant, et garantit un parcours rectiligne de l'air depuis l'entrée du dispositif (1) jusqu'à l'entrée du ventilateur (4).

2. Module de batterie électrique selon la revendication 1, **caractérisé en ce qu'**il comprend un unique organe de ventilation (4).

3. Module de batterie électrique selon la revendication 2, **caractérisé en ce que** l'unique organe de ventilation (4), le premier et le deuxième échangeurs de chaleur (2, 3) sont disposés les uns relativement aux autres de sorte que la direction d'écoulement (D) du flux d'air (F) est essentiellement rectiligne.

4. Module de batterie électrique selon l'une des revendications 1 à 3, **caractérisé en ce que** le premier et le deuxième échangeurs (2, 3) sont parallèles et en regard l'un de l'autre.

5. Module de batterie électrique selon l'une quelconque des revendications précédentes, **caractérisé en ce que** le premier échangeur de chaleur (2) est un évaporateur.

6. Module de batterie électrique selon l'une des revendications précédentes, **caractérisé en ce que** le deuxième échangeur de chaleur (3) est un radiateur.

7. Module de batterie électrique selon l'une quelconque des revendications précédentes, **caractérisé en ce qu'**au moins un organe de ventilation (4) est un ventilateur centrifuge.

8. Module de batterie électrique selon l'une des revendications 2 à 7, **caractérisé en ce qu'**il comprend l'unique organe de ventilation (4) disposé en amont de l'évaporateur (2) et du radiateur (3).

## Patentansprüche

1. Elektrisches Batteriemodul für ein Kraftfahrzeug, umfassend eine Heizungs- und/oder Klimasteuerungseinrichtung für ein Kraftfahrzeug, die Einrichtung umfassend einen ersten Wärmeaustauscher (2) und einen zweiten Wärmeaustauscher (3), wobei der erste und der zweite Wärmetauscher (2, 3) geeignet sind, die Temperatur eines Luftstroms (F) zu verändern, der in einer Strömungsrichtung (D) hindurchströmt, und mindestens ein Lüftungselement (4), das geeignet ist, den Luftstrom (F) in Bewegung zu versetzen, wobei das Lüftungselement (4) ein Zentrifugalventilator ist, **dadurch gekennzeichnet, dass** zumindest das Lüftungselement (4) stromab des ersten und des zweiten Wärmeaustauschers (2, 3) bezogen auf die Strömungsrichtung (D) des hindurchströmenden Luftstroms (F) angeordnet ist und eine geradlinige Bahn der Luft vom Eintritt der Einrichtung (1) bis zum Eintritt des Ventilators (4) gewährleistet.

2. Elektrisches Batteriemodul nach Anspruch 1, **dadurch gekennzeichnet, dass** es ein einzelnes Lüftungselement (4) umfasst.

3. Elektrisches Batteriemodul nach Anspruch 2, **dadurch gekennzeichnet, dass** das einzelne Lüftungselement (4), der erste und der zweite Wärmetauscher (2, 3) so zueinander angeordnet sind, dass die Strömungsrichtung (D) des Luftstroms (F) im Wesentlichen geradlinig ist.

4. Elektrisches Batteriemodul nach einem der Ansprüche 1 bis 3, **dadurch gekennzeichnet, dass** der erste und der zweite Austauscher (2, 3) parallel und einander zugewandt sind.

5. Elektrisches Batteriemodul nach einem der vorhergehenden Ansprüche, **dadurch gekennzeichnet, dass** der erste Wärmeaustauscher (2) ein Verdampfer ist.

6. Elektrisches Batteriemodul nach einem der vorhergehenden Ansprüche, **dadurch gekennzeichnet, dass** der zweite Wärmeaustauscher (3) ein Radiator ist.

7. Elektrisches Batteriemodul nach einem der vorhergehenden Ansprüche, **dadurch gekennzeichnet, dass** mindestens ein Lüftungselement (4) ein Zentrifugalventilator ist.

8. Elektrisches Batteriemodul nach einem der Ansprüche 2 bis 7, **dadurch gekennzeichnet, dass** es das einzelne Lüftungselement (4) umfasst, das stromauf des Verdampfers (2) und des Radiators (3) angeordnet ist.

## Claims

1. Electric battery module for a motor vehicle, comprising a heating and/or air-conditioning device for a motor vehicle, said device comprising a first heat exchanger (2) and a second heat exchanger (3), the first and the second heat exchanger (2, 3) being able to modify the temperature of an air flow (F) passing through in a direction of flow (D), and at least one ventilation member (4) that is able to set said air flow (F) in motion, said ventilation member (4) being a fan of the centrifugal type, **characterized in that** at least the ventilation member (4) is disposed downstream of the first and the second heat exchanger (2, 3) relative to the direction of flow (D) of the air flow (F) passing through, and ensures that the air travels in a straight line from the inlet of the device (1) to the inlet of the fan (4).

2. Electric battery module according to Claim 1, **characterized in that** it comprises a single ventilation member (4).

3. Electric battery module according to Claim 2, **characterized in that** the single ventilation member (4) and the first and the second heat exchanger (2, 3) are disposed relative to one another such that the direction of flow (D) of the air flow (F) is substantially in a straight line.

4. Electric battery module according to one of Claims 1 to 3, **characterized in that** the first and the second heat exchanger (2, 3) are parallel to and opposite one another.

5. Electric battery module according to any one of the preceding claims, **characterized in that** the first heat exchanger (2) is an evaporator.

6. Electric battery module according to one of the preceding claims, **characterized in that** the second heat exchanger (3) is a radiator.

7. Electric battery module according to any one of the preceding claims, **characterized in that** at least one ventilation member (4) is a centrifugal fan.

8. Electric battery module according to one of Claims 2 to 7, **characterized in that** it comprises the single ventilation member (4) disposed upstream of the evaporator (2) and of the radiator (3).
